# EUROPÄISCHE PATENTSCHRIFT

(11) **EP 1 765 646 B1**
(45) Veröffentlichungstag und Bekanntmachung des Hinweises auf die Patenterteilung: **01.12.2010**
(21) Anmeldenummer: 05762254.0
(22) Anmeldetag: 09.07.2005
(51) Int. Cl.: B60S 1/08

(54) **OPTOELEKTRONISCHE SENSOREINRICHTUNG**
OPTOELECTRONIC SENSOR DEVICE
DISPOSITIF DE DETECTION OPTOELECTRONIQUE

(30) Priorität: 13.07.2004 DE 102004033696
(43) Veröffentlichungstag der Anmeldung: 28.03.2007
(73) Patentinhaber: Leopold Kostal GmbH & Co. KG, 58507 Lüdenscheid (DE)
(72) Erfinder: RICHWIN, Matthias, 44139 Dortmund (DE); WEBER, Thomas, 58513 Lüdenscheid (DE)
(86) Internationale Anmeldenummer: PCT/EP2005/007444
(87) Internationale Veröffentlichungsnummer: WO 2006/005552

(56) Entgegenhaltungen:
- EP-A- 0 412 653
- WO-A-99/14088
- WO-A-2004/007255
- GB-A- 1 484 613
- GB-A- 2 309 300
- US-A- 4 960 996
- US-A1- 2002 121 972

## Beschreibung

Die vorliegende Erfindung betrifft eine optoelektronische Sensoreinrichtung für ein Kraftfahrzeug zur Detektion von Feuchtigkeit auf einer Kraftfahrzeugscheibe, mit einem Sender und einem Empfänger für optische Strahlung, welche von der Kraftfahrzeugscheibe in Richtung auf den Empfänger reflektiert wird, wobei die von der Kraftfahrzeugscheibe reflektierte Strahlung eine fokussierende Empfängeroptik durchläuft und mit einem Koppelelement zur Ein- und Auskopplung der optischen Strahlung in die Kraftfahrzeugscheibe.

Ein derartiger Feuchtigkeitssensor ist aus der DE 197 20 874 C2 bekannt und basiert auf dem Funktionsprinzip der gestörten Totalreflexion von infrarotem Licht, welches unter einem Winkel von 45° über eine Optik in die Windschutzscheibe eingekoppelt wird. Bei trockener und sauberer Scheibe wird das Licht an der Scheibenaußenseite total reflektiert und wird unter einem Winkel von ebenfalls 45° über eine zweite Optik von einem Empfänger detektiert. Eine Benetzung der Scheibe koppelt Licht aus dem Strahlengang aus, da an dieser Stelle die Totalreflexion nicht mehr stattfindet.

Problematisch ist Fremdlicht, beispielsweise über die Fahrzeugscheibe in den Strahlengang eingestreutes Tageslicht, welches sich bei einer derartigen Sensoranordnung nicht vollständig ausschließen läßt. Fremdlicht kann die Empfindlichkeit des Feuchtigkeitssensors reduzieren oder auch Fehlauslösungen verursachen, so daß eine Reduzierung eine Funktionsverbesserung bedeutet.

Eine gattungsgemäße optoelektronische Sensoranordnung ist auch aus der UK Patent Application GB 2 309 300 A bekannt. Dieses Dokument zeigt im Strahlengang vor dem Strahlungsempfänger eine Anordnung, bestehend aus einem optischen Filter und einer Blende, die zusammenwirkend den Einfall von Fremdlicht auf den Empfänger verringern.

Es stellte sich die Aufgabe, einen Feuchtigkeitssensor für ein Kraftfahrzeug zu schaffen, bei dem der Einfluß von Fremdlicht auf den Empfänger deutlich reduziert ist.

Diese Aufgabe wird erfindungsgemäß erstens dadurch gelöst, daß der Empfänger als ein ortsauflösender Empfänger ausgebildet ist.

Diese Aufgabe wird erfindungsgemäß zweitens dadurch gelöst, daß vor dem Empfänger mindestens ein durch eine Filterfolie ausgebildetes optisches Element angeordnet ist, das den Akzeptanzwinkel des Empfängers einschränkt.

Nutzlicht, also Licht, das vom Sender des Feuchtigkeitssensors über die Senderoptik unter vorzugsweise 45° in die Windschutzscheibe eingekoppelt wird, kann die Empfängeroptik ebenfalls nur unter einem Winkel von 45° erreichen. Fremdlicht hingegen, also Licht, das von anderen Quellen oder vom Sender, aber auf einem anderen optischen Weg, die Scheibe erreicht, wird nur mit sehr geringer Wahrscheinlichkeit unter 45° dort auftreffen, und wegen der Totalreflexion auch nur mit sehr geringer Wahrscheinlichkeit unter 45° auf die Empfängeroptik treffen.

Die erfindungsgemäßen Lösungen beruhen darauf, die Richtungsselektivität des Strahlungsempfängers zu vergrößern.

Mögliche Varianten der Erfindung werden im folgenden anhand der Zeichnung dargestellt und näher erläutert.

Es zeigen
- Figur 1: eine erste und eine zweite Ausgestaltung eines Feuchtigkeitssensors,
- Figur 2: eine dritte Ausgestaltung eines Feuchtigkeitssensors,
- Figur 3: das Funktionsprinzip einer optoelektronischen Sensoreinrichtung.

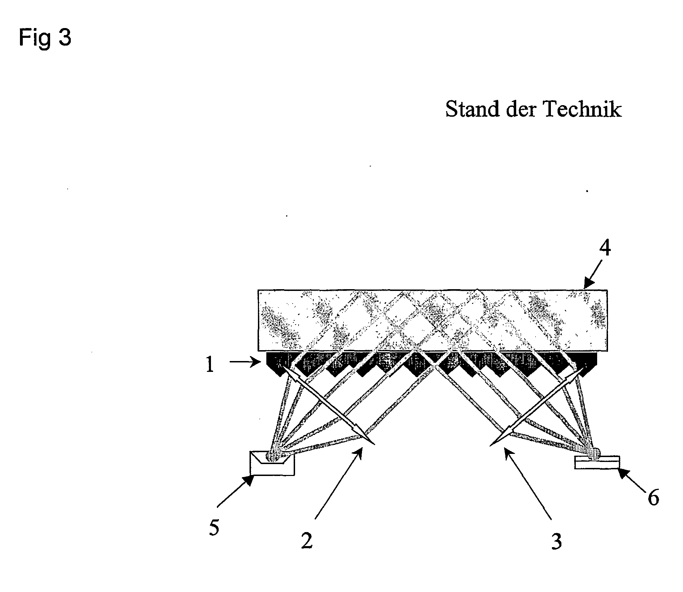

Die Figur 3 zeigt schematisch den Strahlengang bei einer optoelektronischen Sensoreinrichtung, wobei die dargestellte Anordnung in so weit dem vorbekannten Stand der Technik entspricht. Um Regen oder Verschmutzungen auf einer Fahrzeugscheibe (4) eines Kraftfahrzeugs zu sensieren, strahlt eine als Lichtsender (5) wirkende Sende-Diode eine optische Strahlung, vorzugsweise im nahen Infrarotbereich bei einer Wellenlänge von ca. 880 nm, über eine erste Linsenstruktur (2) zur Parallelisierung des Lichtbündels und ein Koppelelement (1) unter einem Winkel von 45° in das Glas der Fahrzeugscheibe (4) ein. An der Außenfläche der Fahrzeugscheibe (4) wird der einfallende Lichtstrahl unter einem Winkel von 45° totalreflektiert und fällt über das Koppelelement (1) und über eine fokussierend wirkende zweite Linsenstruktur (3) auf eine als Lichtempfänger (6) wirkende Foto-Diode.

Befinden sich Regentropfen oder Schmutzteilchen auf der Außenseite der Fahrzeugscheibe (4), so wird an diese Stelle eine Teil der auftreffenden Strahlung aus der Fahrzeugscheibe (4) ausgekoppelt oder absorbiert, was eine Verminderung der von der Foto-Diode (6) empfangenen Strahlungsintensität bewirkt. Diese Intensitätsänderung kann durch eine mit der Foto-Diode verbundene Elektronik, die in der Figur nicht dargestellt ist, leicht registriert werden.

Der dargestellte Stand der Technik löst vor allem das Problem der brechungsfreien Lichteinkopplung in die Fahrzeugscheibe (4). Das hierzu verwendete Koppelelement (1) kann vorteilhafterweise durch eine Folie oder durch einen Glaskörper ausgebildet sein, welcher eine Prismenstruktur aufweist, wobei die Flächen der Prismen genau senkrecht zum eingekoppelten bzw. ausgekoppelten Lichtstrahlenbündel angeordnet sind, wodurch ein brechungsfreier Übergang der Strahlung in den Koppelelement (1) sowie aus dem Koppelelement (1) heraus, erreicht wird.

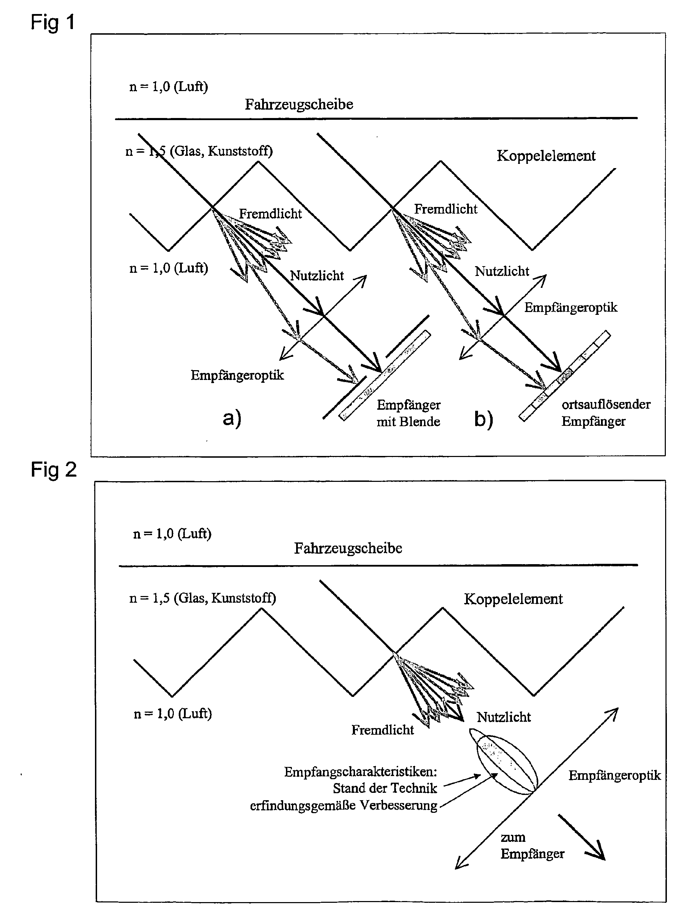

In den Figuren 1 und 2 werden drei erfindungsgemäße Möglichkeiten, die Fremdlichtempfindlichkeit eines Feuchtigkeitssensors zu reduzieren, in einer schematischen Darstellung vorgestellt. Dargestellt ist jeweils die Prismenstruktur des Koppelelements, die Außenfläche der Fahrzeugscheibe, sowie jeweils der empfängerseitige Teil des Strahlengangs.

Die Figur 1 zeigt in einer Darstellung zwei Realisierungen der Erfindung, die jeweils eine fokussierende Empfängeroptik aufweisen. Die Empfängeroptik besitzt wie jede Linse die Eigenschaft, den Winkel der einfallenden Strahlung in einen Ort in der Brennebene zu transformieren. Vom Lichtsender stammende Strahlung, die unter einem Ausfallswinkel von 45° von der Kraftfahrzeugscheibe reflektiert wird, also Nutzlicht, wird dabei auf eine vorgegebene Stelle des Empfängers abgebildet, Fremdlicht aus anderen Winkeln dagegen auf andere Positionen.

### 1. Reduzierung von Fremdlicht-Empfindlichkeit im Feuchtigkeitssensor durch Einsatz einer Blende in der Empfängeroptik (Figur 1a)

Das Fremdlicht kann erfindungsgemäß durch eine Lochblende in der Brennebene der Empfängeroptik oder unmittelbar darüber effektiv absorbiert werden. Die Blendengröße muß dabei so gewählt werden, daß sie nach Möglichkeit nur Nutzlicht durchläßt.

### 2. Reduzierung von Fremdlicht-Empfindlichkeit im Feuchtigkeitssensor durch ortsaufgelöste Messung (Figur 1b)

Statt eines räumlich integrierenden Empfängers (z. B. Photodiode, -transistor) ist die Verwendung eines räumlich auflösenden Empfängers, wie zum Beispiel eines CCD-Chips oder eines CMOS-Kamera-Chips vorgesehen. Ein räumlich auflösender Empfänger besitzt zusätzlich den Vorteil, daß eine Einmessung auf die Optik möglich ist. In einem Kalibrationsschritt wird der für das Nutzlicht optimale Bildbereich des räumlich auflösenden Empfängers bestimmt, wodurch Toleranzen in der Optik kompensiert werden. Ferner ist es möglich, gerade die Bildbereiche des Empfängers, die Fremdlicht empfangen, gezielt auszuwerten, um so z. B. für weitere Fahrzeugfunktionen eine zusätzliche Fremdlichterfassung durchzuführen.

### 3. Reduzierung von Fremdlicht-Empfindlichkeit im Feuchtigkeitssensor durch Verringerung des Akzeptanzwinkels der Empfängeroptik (Figur 2)

Die Empfängeroptik nach dem Stand der Technik besitzt eine Hauptrichtung (45° zur Scheibe), unter der sie die größte Empfindlichkeit aufweist, kann jedoch auch Licht aus einem größeren Winkelbereich noch mit schwächerer Empfindlichkeit auf den eigentlichen Empfänger abbilden. Da nun aber Fremdlicht wie oben erläutert gerade nicht aus der Hauptrichtung auf die Optik fällt, sondern aus anderen Richtungen, kann durch eine Reduzierung der Winkelbreite der Empfindlichkeitsverteilung die Empfindlichkeit des Sensors gegen Fremdlicht verringert werden, wie dies die Figur 2 schematisch andeutet.

Dies kann durch eine entsprechende Auslegung (Ausformung) der optischen Elemente erfolgen, oder auch durch spezielle Filtersysteme, z. B. Folien, die nur Licht aus bestimmten Winkelbereichen durchlassen und Licht aus anderen Winkeln absorbieren oder reflektieren. Diese Filtersysteme können dabei an beliebiger Stelle im Strahlengang der Empfängerseite zwischen Windschutzscheibe und Oberseite der Empfängeroptik angebracht bzw. aufgebracht sein. Zur Lösung der erfinderischen Aufgabe geeignete Filter werden in Folienform großtechnisch zum Beispiel zur Reduzierung von Blendwirkung bzw. zur Verringerung des Sichtwinkels in LCD-Displays hergestellt.

## Patentansprüche

1. Optoelektronische Sensoreinrichtung für ein Kraftfahrzeug zur Detektion von Feuchtigkeit auf einer Kraftfahrzeugscheibe (4), mit einem Sender (5) und einem Empfänger (6) für optische Strahlung, welche von der Kraftfahrzeugscheibe (4) in Richtung auf den Empfänger (6) reflektiert wird, wobei die von der Kraftfahrzeugscheibe reflektierte Strahlung eine fokussierende Empfängeroptik (3) durchläuft, und mit einem Koppelelement (1) zur Ein- und Auskopplung der optischen Strahlung in die Kraftfahrzeugscheibe (4),
**dadurch gekennzeichnet,**
**daß** der Empfänger (6) als ein ortsauflösender Empfänger ausgebildet ist.

2. Optoelektronische Sensoreinrichtung nach Anspruch 1, **dadurch gekennzeichnet, daß** der ortsauflösender Empfänger ein CMOS- oder CCD-Sensor ist.

3. Optoelektronische Sensoreinrichtung nach Anspruch 1 oder 2, **dadurch gekennzeichnet, daß** nur die an einem Teil der Sensorfläche auftreffende Strahlung zur Feuchtigkeitsdetektion ausgewertet wird.

4. Optoelektronische Sensoreinrichtung für ein Kraftfahrzeug zur Detektion von Feuchtigkeit auf einer Kraftfahrzeugscheibe (4), mit einem Sender (5) und einem Empfänger (6) für optische Strahlung, welche von der Kraftfahrzeugscheibe in Richtung auf den Empfänger (6) reflektiert wird, wobei die von der Kraftfahrzeugscheibe reflektierte Strahlung eine fokussierende Empfängeroptik (3) durchläuft und mit einem Koppelelement (1) zur Ein- und Auskopplung der optischen Strahlung in die Kraftfahrzeugscheibe, wobei vor dem Empfänger (6) mindestens ein durch ein Filter ausgebildetes optisches Element angeordnet ist, **dadurch gekennzeichnet, daß** das Filter eine Filterfolie ist, die den Akzeptanzwinkel des Empfängers einschränkt.

5. Optoelektronische Sensoreinrichtung nach einem oder mehreren der vorgenannten Ansprüche, **dadurch gekennzeichnet, daß** die Sensoreinrichtung einen mit der Kraftfahrzeugscheibe verbundenen Regensensor oder Beschlagssensor ausbildet.

## Claims

1. Optoelectronic sensor facility for a motor vehicle for detecting moisture on the window pane (4) of a motor vehicle, having a transmitter (5) and a receiver (6) for optical radiation which is reflected from the windowpane (4) of the motor vehicle towards the receiver (6), in the course of which the radiation reflected from the windowpane of the motor vehicle passes through a focusing optical receiver system (3), and having a coupling element (1) for the purpose of coupling and decoupling the optical radiation into the windowpane (4) of the motor vehicle,
**characterised in that**
the receiver (6) is constructed as a high-sensitivity resolution receiver.

2. Optoelectronic sensor facility in accordance with Claim 1, **characterised in that** the high-sensitivity resolution receiver is a CMOS or CCD sensor.

3. Optoelectronic sensor facility in accordance with Claim 1 or Claim 2, **characterised in that** only the radiation impinging on part of the sensor surface is evaluated for the purpose of moisture detection.

4. Optoelectronic sensor facility for a motor vehicle for the purpose of detecting moisture on the windowpane (4) of a motor vehicle, having a transmitter (5) and a receiver (6) for optical radiation which is reflected from the windowpane (4) of a motor vehicle towards the receiver (6), in the course of which the radiation reflected from the windowpane of the motor vehicle passes through a focusing optical receiver system (3), and having a coupling element (1) for the purpose of coupling and decoupling the optical radiation into the windowpane (4) of the motor vehicle, with at least one optical element formed by a filter being arranged in front of the receiver (6), **characterised in that** the filter is a filter foil which restricts the acceptance angle of the receiver.

5. Optoelectronic sensor facility in accordance with one or more of the above claims, **characterised in that** the sensor facility constitutes a rain sensor or condensation sensor which is connected to the windowpane of the motor vehicle.

## Revendications

1. Système de détection optoélectronique pour un véhicule automobile pour la détection d'humidité sur une glace (4) du véhicule automobile, avec un émetteur (5) et un récepteur (6) pour un rayonnement optique, qui est réfléchi par la glace (4) du véhicule automobile en direction du récepteur (6), le rayonnement optique, réfléchi par la glace du véhicule automobile, passant par un système optique de réception (3) focalisant, et avec un élément de couplage (1) pour le couplage et le découplage du rayonnement optique dans la glace (4) du véhicule automobile, **caractérisé en ce que** le récepteur (6) est réalisé en tant que récepteur sensible à la position.

2. Système de détection optoélectronique selon la revendication 1, **caractérisé en ce que** le récepteur sensible à la position est un détecteur CMOS ou CCD.

3. Système de détection optoélectronique selon revendication 1 ou 2, **caractérisé en ce que** seul le rayonnement incident sur une partie de la surface de détection est évalué pour la détection de l'humidité.

4. Système de détection optoélectronique pour un véhicule automobile pour la détection d'humidité sur une glace (4) du véhicule automobile, avec un émetteur (5) et un récepteur (6) pour un rayonnement optique, qui est réfléchi par la glace du véhicule automobile sur le récepteur, (6), le rayonnement optique, réfléchi par la glace du véhicule automobile passant par un système optique de réception (3) focalisant, et avec un élément de couplage (1) pour le couplage et le découplage du rayonnement optique dans la glace du véhicule automobile, au moins un élément optique, formé par un filtre, étant disposé en amont du récepteur (6), **caractérisé en ce que** le filtre est un film de filtre, qui limite l'angle d'acceptance du récepteur.

5. Système de détection optoélectronique selon l'une ou plusieurs des revendications précédentes, **caractérisé en ce que** ledit système de détection forme un détecteur de pluie ou un détecteur de buée, qui est relié à la glace du véhicule automobile.
